# EUROPÄISCHE PATENTSCHRIFT

(11) **EP 2 449 256 B1**
(45) Veröffentlichungstag und Bekanntmachung des Hinweises auf die Patenterteilung: **04.09.2013**
(21) Anmeldenummer: 10710222.0
(22) Anmeldetag: 12.03.2010
(51) Int. Cl.: F03D 3/06

(54) **SAVONIUS-ROTOR**
SAVONIUS ROTOR
ROTOR DU TYPE SAVONIUS

(30) Priorität: 01.10.2009 DE 102009043684
(43) Veröffentlichungstag der Anmeldung: 09.05.2012
(73) Patentinhaber: Schul, Karl Dirk, 66578 Schiffweiler (DE)
(72) Erfinder: Schul, Karl Dirk, 66578 Schiffweiler (DE)
(74) Vertreter: Theobald, Andreas
(86) Internationale Anmeldenummer: PCT/EP2010/001697
(87) Internationale Veröffentlichungsnummer: WO 2010/130315

(56) Entgegenhaltungen:
- DE-U1-202007 009 187
- FR-A- 814 027
- US-A- 2 007 963

## Beschreibung

Die vorliegende Erfindung betrifft einen Savonius-Rotor für Windenergieanlagen mit vertikaler Rotationsachse.

Ein Savonius-Rotor umfasst als wesentliche Bestandteile eine obere und eine untere Abschlussplatte zwischen denen sich wenigstens zwei halbkreisförmig gebogenen Schaufeln bzw. Flügel als konkave Windfangflächen erstrecken. Die Flügel sind gegeneinander versetzt angeordnet, so dass im Zentrum des Rotors eine Öffnung vorhanden ist, durch die der Wind zur konkaven Windfangfläche der jewells anderen Schaufel geleitet wird.

Mit dem Savonius-Rotor lassen sich bei relativ niedrigen Drehzahlen hohe Drehmomente erreichen. Außerdem ist keine Ausrichtung bezüglich der Windrichtung nötig. Zudem ist der Savonius-Rotor bereits bei geringen Windgeschwindigkeiten einsatzfähig und weist eine hohe Toleranz gegen Turbulenzen auf. Ein weiterer nicht zu unterschätzender Vorteil des Savonius-Rotors liegt darin, dass er kaum wahrnehmbare Laufgeräusche erzeugt und daher kaum störende Emissionen produziert. Typische Savonius-Rotoren mit bis zu vier Schaufeln sind beispielsweise in DE 10 2007 049 590 A1 beschrieben.

Um die Kraft des Windes besser nutzen zu können, ist in DE 35 19 700 A1 vorgeschlagen worden, Flügel vorzusehen, die von der ursprünglichen halbzylindrischen Form der Flügel des Savonius-Rotors abweichen. Die in DE 35 19 700 vorgeschlagenen Flügel weisen einen radial äußeren Teil auf, der von einem Ausschnitt einer Zylinderfläche gebildet ist, und einen radial inneren Teil, in dem der Flügel in eine ebene Fläche übergeht.

DE202007009187U offenbart einen Savonius Rotor mit gegeneinander versetzt angeordnete Hauptflügel.

FR814027 offenbart einen Savonius Rotor mit gegeneinander versetzt angeordnete Windleitflügel.

Aufgabe der vorliegenden Erfindung ist es, einen vorteilhaften Savonius-Rotor für Windenergieanlagen mit vertikalen Rotationsachsen zur Verfügung zu stellen.

Diese Aufgabe wird durch einen Savonius-Rotor nach Anspruch 1. Die abhängigen Ansprüche enthalten vorteilhafte Weiterbildungen der Erfindung.

Gemäß einem ersten Aspekt der Erfindung umfasst ein erfindungsgemäßer Savonius-Rotor für Windenergieanlagen mit vertikaler Rotationsachse eine obere Abschlussscheibe, eine untere Abschlussscheibe und zwei sich zwischen den Abschlussscheiben erstreckende und gegeneinander versetzt angeordnete Hauptflügel. In einem Schnitt senkrecht zur Rotationsachse sind die Hauptflügel derart halbkreisförmig gebogen, dass sie als Windfangflächen dienende konkave Innenseiten aufweisen. Diesen konkaven Innenseiten der Hauptflügel sind Windleitflügel mit Abstand vorgelagert, wobei die Windleitflügel gegeneinander versetzt angeordnet sind und in einem Schnitt senkrecht zur Rotationsachse derart gebogen sind, dass sie jeweils eine konkave Innenseite aufweisen, die in dieselbe Richtung wie die konkave Innenseite des entsprechenden Hauptflügels zeigt. In einer besonderen Ausgestaltung des Savonius-Rotors weisen die Hauptflügel radial äußerte Abschnitte auf, die im Bezug auf die Umfangsrichtung des Rotors nach außen geneigt sind. Die die radial äußeren Abschnitte der Hauptflügel können hierbei auch von der halbkreisförmigen Biegung abweichen. Der Versatz zwischen den versetzt angeordneten Hauptflügeln kann insbesondere 20 % des Durchmessers der oberen oder unteren Abschlussscheibe betragen. Der Versatz zwischen den versetzt angeordneten Windleitflügeln entspricht in einer vorteilhaften Ausgestaltung dem halben Versatz der Hauptflügel.

Durch die den Hauptflügeln vorgelagerten Windleitflügel und die nach außen geneigten radial äußeren Abschnitte der Hauptflügel lässt sich die Leistung des Savonius-Rotors verbessern. Hierbei sorgen die Windleitflügel für einen stärkeren Antrieb und die nach außen geneigten radial äußeren Enden der Hauptflügel für einen besseren Lufteintritt. Insgesamt ergibt sich dadurch eine gegenüber einem Savonius-Rotor mit rein kreisförmig gebogenen Flügeln und ohne vorgelagerte Windleitflügel eine Leistungserhöhung.

Es hat sich hierbei als besonders vorteilhaft herausgestellt, wenn die Hauptflügel und Windleitflügel jeweils radial äußere Enden aufweisen, also Enden an denen an ihre Distanz von der Rotationsachse am Größten ist, und der Abstand der radial äußeren Enden der Windleitflügel von den radial äußeren Enden der Hauptflügel der halben Distanz zwischen den radial äußeren Enden der Hauptflügel und der Rotationsachse entspricht.

In einer besonders vorteilhaften Weiterbildung des erfindungsgemäßen Savonius-Rotors verjüngt sich der Abstand der Windleitflügel von den Hauptflügeln von den radial äußeren Enden ausgehend zur Rotationsachse hin.

Um das Drehmoment des Savinius-Rotors zu erhöhen, kann den konkaven Innenseiten der Hauptflügel und/oder der Windleitflügel jeweils ein dritter Flügel vorgelagert sein. Dieser dritte Flügel erstreckt sich in einem Schnitt senkrecht zur Rotationsachse von einem Windeinlassende ausgehend in Richtung auf die konkave Innenseite der Hauptflügel bzw. der Windleitflügel. Hierbei kann der dritte Flügel entweder an die konkave Innenseite des der Hauptflügels bzw. des Windleitflügels anstoßen oder es kann ein kleiner Spalt dazwischen verbleiben. Die dritten Flügel können sich jeweils entlang einer geraden Linie in Richtung auf die konkave Innenseite der Hauptflügel bzw. der Windleitflügel erstrecken. Insbesondere können die geraden Linien, entlang derer sich die dritten Flügel erstrecken, im Bezug auf die Umfangsrichtung des Rotors in Richtung auf den Rotormittelpunkt geneigt sein.

Falls ein dritter Flügel vorhanden ist, ist es vorteilhaft, wenn seine Windeinlassenden von der Rotationsachse aus gesehen auf einer radialen Linie mit den radial äußeren Enden der jeweiligen Hauptflügel bzw. eitflügel liegen.

In einer besonderen Ausgestaltung des erfindungsgemäßen Savonius-Rotors stehen die radial äußeren Enden der Hauptflügel über einen von den Abschlussscheiben definierten Kreis vor. Dadurch kann die für den Lufteintritt nutzbare Fläche des Rotors erhöht werden.

In einer weiteren speziellen Ausgestaltung des Savonius-Rotors schließen die radial äußeren Abschnitte der Hauptflügel mit der Tangente am Umfang des Kreises einen Winkel zwischen 10° und 75°, insbesondere einen Winkel zwischen ca. 20° und 50°, ein.

Um die Rotation des Savonius-Rotors zu vergleichmäßigen, können wenigstens zwei Rotoren mit einer gemeinsamen Rotationsachse übereinander angeordnet sein. In diesem Fall sind die Hauptflügel der Rotoren um einen bestimmten Winkel um die Rotationsachse gegeneinander verdreht. Wenn der Savonius-Rotor insbesondere aus zwei Rotoren besteht, die mit einer gemeinsamen Rotationsachse übereinander angeordnet sind, sind die Hauptflügel der Rotoren um 90° um die Rotationsachse gegeneinander verdreht. Auf diese Weise lässt sich bereits mit zwei übereinander angeordneten Rotoren eine ziemlich gleichmäßige Rotation des Savonius-Rotors herbeiführen.

In einer Weiterbildung des erfindungsgemäßen Savinius-Rotors, die der Optimierung der Rotationsgeschwindigkeit des Rotors dient, sind auf der Abschlussscheibe des obersten Rotors Hilfsflügel angeordnet, die gleichmäßig um die Rotationsachse verteilt und gegen die Drehrichtung des Rotors um einen Neigungswinkel aus der Vertikalen heraus geneigt sind. Die Neigungswinkel können im Bereich zwischen 10° und 50° liegen, vorzugsweise im Bereich zwischen 20° und 30°, und insbesondere bei 25°.

Bei einem Savonius-Rotor mit auf der Abschlussscheibe des obersten Rotors angeordneten Hilfsflügeln kann diese oberste Abschlussscheibe bei den Hauptflügeln zumindest im Bereich der radial äußeren Abschnitte der Hauptflügel Öffnungen aufweisen. Die Hilfsflügel sind dann so um die Rotationsachse herum verteilt, dass sich jeweils ein Hilfsflügel über einer der Öffnungen in der Abschlussscheibe befindet. In diesem Zusammenhang ist es vorteilhaft, wenn die Zahl der Hilfsflügel ein ganzzahliges Vielfaches der Zahl der Hauptflügel ist, da dann bei gleichmäßiger Verteilung der Hilfsflügel sicher gestellt werden kann, dass sich jeweils einer der Hilfsflügel über einer der Öffnungen in der obersten Abschlussplatte befindet. Beispielsweise können bei zwei Hauptflügeln vier, sechs oder vorzugsweise acht Hilfsflügel vorhanden sein. Aber auch eine höhere Zahl an Hilfsflügeln ist möglich.

Gemäß einem zweiten Aspekt der vorliegenden Erfindung wird außerdem ein Savonius-Rotor für Windenergieanlagen mit vertikaler Rotationsachse zur Verfügung gestellt, wobei der Rotor eine obere Abschlussscheibe und eine untere Abschlussscheibe sowie zwei sich zwischen den Abschlussscheiben erstreckende und gegeneinander versetzt angeordnete Hauptflügel umfasst. In einem Schnitt senkrecht zur Rotationsachse sind die Hauptflügel derart gebogen, dass sie jeweils eine als Windfangfläche dienende konkave Innenseite aufweisen. Diesen konkaven Innenseiten der Hauptflügel sind Windleitflügel mit Abstand vorgelagert, wobei die Windleitflügel gegeneinander versetzt angeordnet sind und in einem Schnitt senkrecht zur Rotationsachse derart gebogen sind, dass sie jeweils eine konkave Innenseite aufweisen, die in dieselbe Richtung wie die konkave Innenseite des entsprechenden Hauptflügels zeigt.

Mit Hilfe der Windleitflügel lässt sich ein stärkerer Antrieb des Savonius-Rotors herbeiführen. Die mit Bezug auf den ersten Aspekt der Erfindung beschriebenen Weiterbildungen der Windleitflügel sind auch beim Savonius-Rotor gemäß dem zweiten Aspekt der Erfindung möglich.

Gemäß einem dritten Aspekt der Erfindung wird ein Savonius-Rotor für Windenergieanlagen zur Verfügung gestellt, wobei der Rotor eine obere Abschlussscheibe, eine untere Abschlussscheibe sowie zwei sich zwischen den Abschlussscheiben erstreckende und gegeneinander versetzt angeordnete Windfangflügel umfasst. Die Windfangflügel sind in einem Schnitt senkrecht zur Rotationsachse derart halbkreisförmig gebogen, dass sie jeweils eine als Windfangfläche dienende konkave Innenfläche aufweisen. In ihren radial äußeren Abschnitten weichen die Windfangflügel von der halbkreisförmigen Biegung ab und sind in Bezug auf die Umfangsrichtung des Rotors nach außen geneigt.

Durch die nach außen geneigten radial äußeren Enden der Windfangflügel lässt sich der Lufteintritt in den Savonius-Rotor verbessern. Die mit Bezug auf den ersten Aspekt der vorliegenden Erfindung beschriebenen Weiterbildungen der Hauptflügel können auch bei den Windfangflügeln des Savonius-Rotors gemäß dem dritten Aspekt der Erfindung zur Anwendung kommen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein erstes Ausführungsbeispiel für einen erfindungsgemäßen Savonius-Rotor in einer perspektivischen Darstellung.
- Figur 2: zeigt den Aufbau des Savonius-Rotors gemäß dem ersten Ausführungsbeispiel in einem Schnitt senkrecht zur Rotationsachse.
- Figur 3: zeigt die versetzte Anordnung der beiden Rotoren aus Figur 1 in einem Schnitt senkrecht zur Rotationsachse.
- Figur 4: zeigt eine Anordnung von Hilfsflügeln auf der obersten Abschlussplatte des Savonius-Rotors in einer Draufsicht.
- Figur 5: zeigt die Anordnung der Hilfsflügel aus Figur 4 in einer Seitenansicht.
- Figur 6: zeigt ein zweites Ausführungsbeispiel für den Savonius-Rotor in einem Schnitt senkrecht zur Rotationsachse.

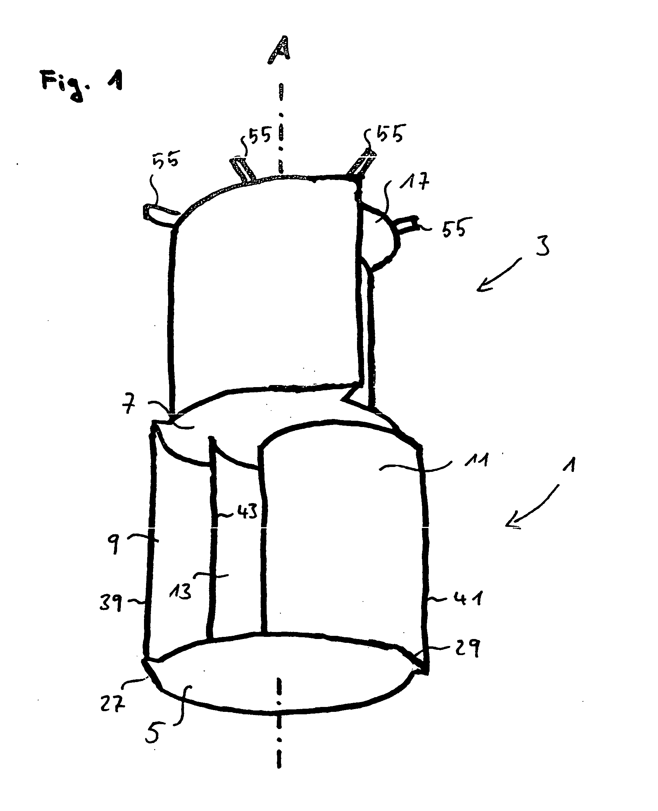

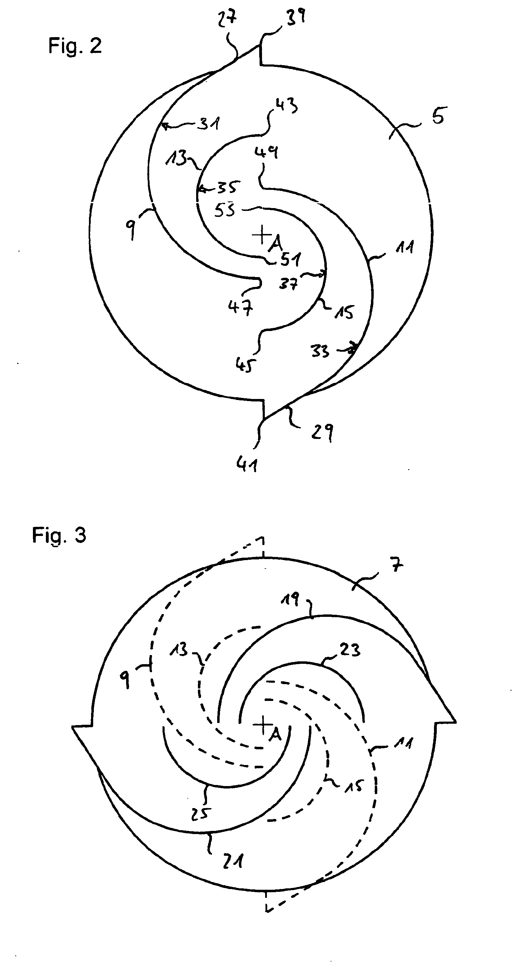

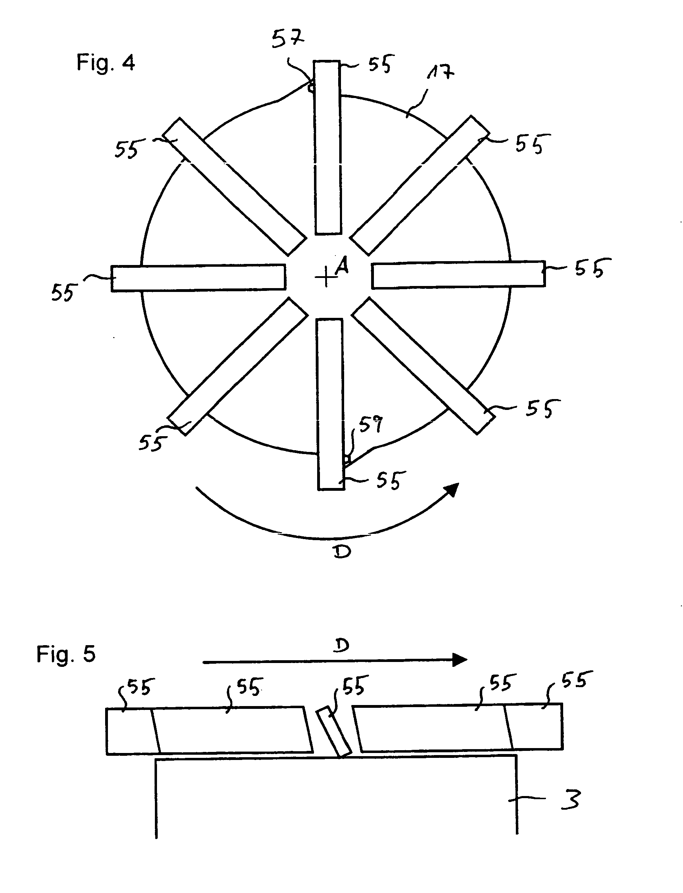

Ein Ausführungsbeispiel für den erfindungsgemäßen Savonius-Rotor wird nachfolgend mit Bezug auf die Figuren 1 bis 5 beschrieben, wobei Figur 1 den Savonius-Rotor in einer perspektivischen Darstellung zeigt, die Figuren 2 und 3 den Rotor in einer schematischen Schnittansicht zeigen, Figur 4 eine Draufsicht auf die obere Abschlussscheibe des Savonius-Rotors zeigt und Figur 5 den obersten Abschnitt des Rotors in einer Seitenansicht zeigt.

Der Savonius-Rotor gemäß dem Ausführungsbeispiel umfasst einen unteren Rotor 1 und einen oberen Rotor 3, die entlang einer vertikalen Rotationsachse A übereinander gestapelt sind. Der untere Rotor 1 weist eine untere Abschlussplatte 5 und eine obere Abschlussplatte 7 auf, zwischen denen sich zwei Hauptflügel 9, 11 des Rotors erstrecken. Den Hauptflügeln 9, 11 sind Windleitflügel 13, 15 vorgelagert. Der obere Rotor 3 weist ebenfalls eine untere Abschlussplatte und eine obere Abschlussplatte 17 auf, wobei die untere Abschlussplatte des oberen Rotors 3 mit der oberen Abschlussplatte 7 des unteren Rotors 1 identisch ist. Der obere Rotor 3 weist dieselbe Anordnung von Hauptflügeln 19, 21 und Windleitflügeln 23, 25 wie der untere Rotor 1 auf, wobei die gesamte Anordnung gegenüber der des unteren Rotors 1 um 90° um die Rotationsachse A herum verdreht ist. Figur 2 zeigt den unteren Rotor 1 in einem Schnitt senkrecht zur Rotationsachse A, der den Verlauf der Hauptflügel oder Windfangflügel 9, 11 sowie der Windleitflügel 13, 15 erkennen lässt. Figur 3 zeigt einen Schnitt senkrecht zur Rotationsachse A durch den oberen Rotor, der den Verlauf der Hauptflügel oder Windfangflügel 19, 21 sowie den Verlauf der Windleitflügel 23, 25 des oberen Rotors 3 zeigt. Darüber hinaus ist in Figur 3 die Anordnung der Hauptflügel 9, 11 sowie der windleitflügel 13, 15 des unteren Rotors 3 gestrichelt eingezeichnet, um die relative Orientierung des unteren Rotors 1 zum oberen Rotor 3 zu verdeutlichen.

Nachfolgend wird die Anordnung der Hauptflügel 9, 11 sowie der Windleitflügel 13, 15 lediglich unter Bezugsnahme auf Figur 2 anhand des unteren Rotors 1 beschrieben. Die Anordnung der entsprechenden Flügel 19, 21, 23, 25 im oberen Rotor 3 entspricht der im unteren Rotor 1, weshalb auf eine Beschreibung der Flügelanordnung im oberen Rotor 3 nicht weiter eingegangen wird.

Die Hauptflügel 9 und 11 weisen in dem in Figur 2 dargestellten Schnitt eine weitgehend halbkreisförmige Biegung auf, von der im vorliegenden Ausführungsbeispiel in den radial äußeren Abschnitten 27, 29 der beiden Hauptflügel 9, 11 abgewichen wird. In den radial äußeren Bereichen 27, 29 verlaufen die Hauptflügel des Ausführungsbeispiels gerade, und stehen über dem Umfang der im Wesentlichen kreisförmigen Abschlussscheiben über.

Lediglich im Bereich des Überstandes weichen die Abschlussscheiben 5, 7 von der Kreisform ab. Der Verlauf der geraden Linie, entlang derer sich die äußeren Enden 27, 29 erstrecken, ist im vorliegenden Ausführungsbeispiel so gewählt, dass diese Linie die Tangente des kreisförmigen Randes der Abschlussplatten 5, 7 in einem Winkel von ca. 20° - 30° schneidet. Insgesamt ergibt sich damit eine Geometrie der Hauptflügel, die im Bereich der radial äußeren Enden der Hauptflügel 9, 11 von der ansonsten halbkreisförmigen Biegung abweicht und eine im Bezug auf die Umfangsrichtung des Rotors nach außen weisende Neigung besitzen. Diese leichte Neigung nach außen vergrößert die für den Lufteintritt in den Rotor nutzbare Fläche und verbessert den Lufteintritt in den Rotor.

Obwohl im vorliegenden Ausführungsbeispiel der Winkel, unter dem die gerade Linie die Tangente des kreisförmigen Randes der Abschlussplatten 5, 7 schneidet, ca. 20° - 30° beträgt, sind auch andere, insbesondere größere Schnittwinkel sind möglich. Grundsätzlich machen Schnittwinkel zwischen 10° und 75° Sinn.

Zudem weisen die Hauptflügel einen Versatz auf, d. h. ihre radial inneren Enden 47, 49 befinden sich nicht an der Rotationsachse A, sondern sind um zirka 20 % des Durchmessers der Abschlussplatte 5 radial nach außen verschoben. Dies ermöglicht einen Abfluss des von den Flügeln eingefangenen Windes durch das Zentrum des Rotors.

In der beschriebenen Geometrie der Hauptflügel 9, 11 weisen die beiden Flügel jeweils eine konkave Innenseite 31, 33 auf, die als Windfangflächen dient. Den konkaven Innenseiten 31, 33 sind die Windleitflügel 13, 15 vorgelagert. Die Windleitflügel weisen in dem in Figur 2 dargestellten Schnitt eine halbkreisförmige Gestalt auf, so dass sie als halbe Zylindermantelfläche ausgebildet sind, die jeweils eine konkave Innenseite aufweisen, die in dieselbe Richtung zeigt, wie die konkave Innenseite 31, 33 des zugeordneten Hauptflügels 9, 11. Wie die Hauptflügel 9, 11 sind auch die Windleitflügel 13, 15 gegeneinander versetzt angeordnet, wobei der Versatz in etwa dem halben Versetz der Hauptflügel 9, 11 entspricht.

Sowohl die Hauptflügel 9, 11 als auch die Windleitflügel 13, 15 besitzen jeweils radial äußere Enden 39, 41, 43, 45 und radial innere Enden 47, 49, 51, 53, die alle auf einer durch die Rotationsachse A verlaufenden Radiallinie angeordnet sind. Die Windleitflügel 13, 15 weisen einen im Vergleich zu den Hauptflügeln 9, 11 geringen Krümmungsradius auf. Zudem sind die Krümmungsmittelpunkte der Windleitschaufeln, 13, 15 gegenüber den Krümmungsmittelpunkten der Hauptflügel 9, 11 zur Rotationsachse A hin verschoben, was dazu führt, dass zwischen den Hauptflügeln 9, 11 und den vorgelagerten Windleitflügeln, 13, 15 Strömungskanäle gebildet sind, die sich von außen nach innen hin verjüngen. Die Verschiebung der Krümmungsmittelpunkte der Windleitflügel gegenüber den Krümmungsmittelpunkten der Hauptflügel sowie das Verhältnis des Krümmungsradius der Hauptflügel zum Krümmungsradius der Windleitflügel sind so gewählt, dass sich die radial äußeren Enden 43, 45 der Windleitflügel 13, 15 etwa auf der halben Distanz zwischen der Rotationsachse A und den radial äußeren Enden 39, 41 der Hauptflügel 9, 11 befinden.

Wie bereits erwähnt, ist der obere Rotor 3 mit dem unteren Rotor 1 typischerweise identisch, jedoch um 90° um die Rotationsachse A herum verdreht. Der Savonius-Rotor kann jedoch optional Hilfsflügel 55 umfassen, die auf dem oberen Rotor 3 angebracht sind (vgl. insbesondere Figuren 4 und 5) und dazu dienen, die Rotationsgeschwindigkeit des Rotors zu optimieren. Im vorliegenden Ausführungsbeispiel sind acht Hilfsflügel 55 vorhanden, andere Zahlen von Hilfsflügeln sind jedoch auch möglich. Die Hilfsflügel stehen nicht senkrecht auf der Abschlussplatte 17 des oberen Rotors 3, sondern sind mit einem Neigungswinkel im Bereich zwischen 10° und 50°, insbesondere zwischen 20° und 30°, gegen die Drehrichtung des Rotors aus der Vertikalen gekippt, wie dies in Figur 5 gezeigt ist. Im vorliegenden Ausführungsbeispiel beträgt der Neigungswinkel 25°.

Wenn die optionalen Hilfsflügel 55 vorhanden sind, weist der obere Rotor 3 gegenüber dem unteren Rotor 1 zudem eine Besonderheit auf, nämlich die, das die obere Abschlussplatte 17 bei den Hauptflügeln zumindest im Bereich des Überstandes der radial äußeren Enden der Hauptflügel Öffnungen 57, 59 aufweist, durch die Luft nach oben aus dem oberen Rotor 3 austreten kann.

Die Anordnung der Hilfsflügel 55 ist dann so gewählt, dass über jeder dieser Öffnungen 57, 59 ein Hilfsflügel 55 angeordnet ist. Um diese Anordnung zu ermöglichen und dabei gleichzeitig eine gleichmäßige Verteilung der Hilfsflügel 55 um die Rotationsachse A herum zu gewährleisten, ist die Zahl der Hilfsflügel ein ganzzahliges Vielfaches der Zahl der Hauptflügel 19, 21. Im vorliegenden Ausführungsbeispiel sind bei zwei Hauptflügeln acht Hilfsflügel 55 vorhanden. Eine andere Zahl an Hilfsflügeln ist jedoch auch möglich, beispielsweise 6, 10, 12, etc., so lange die Zahl der Hilfsflügel gerade ist. Sind mehr als zwei Hauptflügel vorhanden, etwa drei Hauptflügel, so kommen beispielsweise 6, 9, 12, etc. Hilfsflügel in Frage.

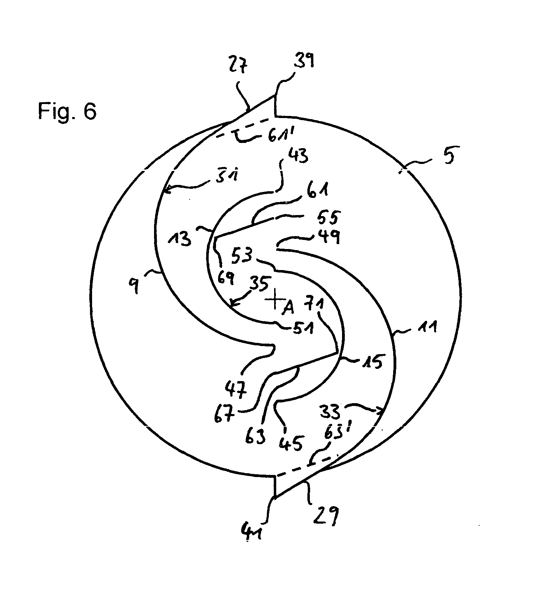

Eine Abwandlung des mit Bezug auf die Figuren 1 bis 5 beschriebenen Ausführungsbeispiels wird nachfolgend mit Bezug auf Figur 6 beschrieben. Diejenigen Elemente des abgewandelten Ausführungsbeispiels, die mit denen aus dem ersten Ausführungsbeispiel identisch sind, sind in Figur 6 mit denselben Bezugsziffern wie im ersten Ausführungsbeispiel bezeichnet und werden nicht noch einmal beschrieben, um Wiederholungen zu vermeiden. In der Abwandlung des erfindungsgemäßen Rotors sind den Windleitflügeln 13, 15 dritte Flügel 61, 63 zugeordnet, die der Erhöhung des Drehmoments des Rotors dienen. Die dritten Flügel weisen Windeinlassenden 65, 67 auf, die auf derselben radialen Linie wie die radial inneren und äußeren Enden 39, 41, 43, 45, 47, 49, 51, 53 der Hauptflügel 9, 11 und der Windleitflügel 13, 15 liegen. Die Windeinlassenden 65, 67 befinden sich dabei etwa in der Mitte zwischen den radial äußeren Enden 43, 45 der Windleitflügel 13, 15 und den radial inneren Enden 47, 49 der Hauptflügel 9, 11. Von den Windeinlassenden 65, 67 aus erstrecken sich die dritten Flügel 61, 63 entlang einer geraden Linie in Richtung auf die konkaven Innenseiten 35, 37 der Windleitflügel 13, 15. Die den konkaven Innenseiten 35, 37 der Windleitflügel 13, 15 zugewandten Enden 69, 71 der dritten Flügel 61, 63 können entweder in einem geringen Abstand in der Größenordnung von wenigen Millimetern von den Innenseiten der Windleitflügel 13, 15 angeordnet sein oder sie können mit den Innenseiten verbunden sein, so dass keine Lücke zwischen den konkaven Innenseiten 35, 37 der Windleitflügel 13, 15 und den dritten Flügeln 61, 63 verbleibt.

Die beschriebenen dritten Flügel brauchen jedoch nicht unbedingt den Windleitflügeln 13, 15 zugeordnet zu sein. Zusätzlich oder alternativ ist es auch möglich, derartige dritte Flügel 61', 63' den Hauptflügeln 9, 11 zuzuordnen. Wenn den Hauptflügeln 9, 11 dritte Flügel 61', 63' zugeordnet sind, können diese insbesondere den radial äußeren Abschnitten 27, 29 der Hauptflügel 9, 11 zugeordnet sein, wie dies in Figur 6 gestrichelt dargestellt ist. Die weitere Ausgestaltung der den Hauptflügeln 9, 11 zugeordneten dritten Flügel 61', 63' kann der mit Bezug auf die den Windleitflügeln 13, 15 zugeordneten dritten Flügeln 61, 63 entsprechen.

Der mit Bezug auf die Ausführungsbeispiele beschriebene Savonius-Rotor kann insbesondere aus einem durchsichtigen Material hergestellt sein, um Abschattungen zu vermeiden. Insbesondere geeignet ist UV-beständiges Polycarbonat, wie es beispielsweise unter dem Markennamen Makrolon bekannt ist. Das Aufstellen des erfindungsgemäße Savonius-Rotors kann mit Hilfe eines Rahmens erfolgen, an dem die Oberseite und die Unterseite des Rotors um die Drehachse A drehbar gelagert sind, so dass eine sich durch den Rotor erstreckende Welle nicht notwendig ist. Die Oberseite und/oder die Unterseite kann zudem eine Welle aufweisen, über die der Rotor mit einem Generator, einer Pumpe oder sonst einem Gerät verbunden werden kann.

Die vorliegende Erfindung wurde zu Illustrationszwecken mit Bezug auf die Figuren anhand konkreter Ausführungsbeispiele beschrieben. Im Rahmen der durch die Ansprüche definierten Gegenstände sind aber auch Abweichungen von den beschriebenen Ausführungsbeispielen möglich.

### Bezugszeichenliste

- 1: unterer Rotor
- 3: oberer Rotor
- 5: Abschlussscheibe
- 7: Abschlussscheibe
- 9: Hauptflügel
- 11: Hauptflügel
- 13: Windleitflügel
- 15: Windleitflügel
- 17: Abschlussscheibe
- 19: Hauptflügel
- 21: Hauptflügel
- 23: Windleitflügel
- 25: Windleitflügel
- 27: äußerer Abschnitt
- 29: äußerer Abschnitt
- 31: konkave Innenseite
- 33: konkave Innenseite
- 35: konkave Innenseite
- 37: konkave Innenseite
- 39: radial äußeres Ende
- 41: radial äußeres Ende
- 43: radial äußeres Ende
- 45: radial äußeres Ende
- 47: radial inneres Ende
- 49: radial inneres Ende
- 51: radial inneres Ende
- 53: radial inneres Ende
- 55: Hilfsflügel
- 57: Öffnung
- 59: Öffnung
- 61: dritter Flügel
- 63: dritter Flügel
- 61': dritter Flügel
- 63': dritter Flügel
- 65: Windeinlassende
- 67: Windeinlassende
- 69: Ende
- 71: Ende

- A: Rotationsachse
- D: Drehrichtung

## Patentansprüche

1. Savonius-Rotor für Windenergieanlagen mit vertikaler Rotationsachse (A), wobei der Rotor (1) eine obere Abschlussscheibe (7), eine untere Abschlussscheibe (5) und zwei sich zwischen den Abschlussscheiben (5, 7) erstreckende und gegeneinander versetzt angeordnete Hauptflügel (9, 11) umfasst, die in einem Schnitt senkrecht zur Rotationsachse (A) derart gebogen sind, dass sie jeweils eine als Windfangfläche dienende konkave Innenseite (31, 33) aufweisen, **dadurch gekennzeichnet, dass** den konkaven Innenseiten (31, 33) der Hauptflügel (9, 11) Windleitflügel (13, 15) mit Abstand vorgelagert sind, wobei die Windleitflügel (13, 15) gegeneinander versetzt angeordnet sind und in einem Schnitt senkrecht zur Rotationsachse (A) derart gebogen sind, dass sie jeweils eine konkave Innenseite (35, 37) aufweisen, die in dieselbe Richtung wie die konkave Innenseite (31, 33) des entsprechenden Hauptflügels (9, 11) zeigt.

2. Savonius-Rotor nach Anspruch 1, dfadurch gekennzeichnet, dass die Hauptflügel (9, 11) radial äußere Abschnitte (27, 29) aufweisen, die im Bezug auf die Umfangsrichtung des Rotors (1) nach außen geneigt sind.

3. Savonius-Rotor nach Anspruch oder Anspruch 2, **dadurch gekennzeichnet, dass** die Hauptflügel (9, 11) und die Windleitflügel (13, 15) jeweils radial äußere Enden (39, 41, 43, 45) aufweisen, an denen ihre Distanz von der Rotationsachse (A) am größten ist, und der Abstand der radial äußeren Enden (43, 45) der Windleitflügel (13, 15) von den radial äußeren Enden der Hauptflügel (9, 11) der halben Distanz zwischen den radial äußeren Enden (39, 41) der Hauptflügel (9, 11) und der Rotationsachse (A) entspricht.

4. Savonius-Rotor nach einem der Ansprüche 1 bis 3, **dadurch gekennzeichnet, dass** sich der Abstand der Windleitflügel (13, 15) von den Hauptflügeln von den radial äußeren Enden (39, 41, 43, 45) ausgehend zur Rotationsachse hin verjüngt.

5. Savonius-Rotor nach einem der Ansprüche 1 bis 4, **dadurch gekennzeichnet, dass** der Versatz zwischen den versetzt angeordneten Hauptflügeln (9, 11) 20% des Durchmessers der oberen oder unteren Abschlussscheibe (5, 7) beträgt.

6. Savonius-Rotor nach einem der Ansprüche 1 bis 5, **dadurch gekennzeichnet, dass** der Versatz zwischen den versetzt angeordneten Windleitflügeln (13, 15) dem halben Versatz der Hauptflügel (9, 11) entspricht.

7. Savonius-Rotor nach einem der Ansprüche 1 bis 6, **dadurch gekennzeichnet, dass** den konkaven Innenseiten (31, 33, 35, 37) Hauptflügel (9, 11) und/oder der Windleitflügel (13, 15) jeweils ein dritter Flügel (61, 63) vorgelagert ist, wobei sich der dritte Flügel (61, 63) in einem Schnitt senkrecht zur Rotationsachse (A) von einem Windeinlassende (65, 67) ausgehend in Richtung auf die konkave Innenseite (31, 33, 35, 37) der Hauptflügel (9, 11) bzw. der Windleitflügel (13, 15) hin erstreckt.

8. Savonius-Rotor nach Anspruch 7, **dadurch gekennzeichnet, dass** die Windeinlassenden (65, 67) der dritten Flügel (61, 63) von der Rotationsachse (A) aus gesehen auf einer radialen Line mit den radial äußeren Enden (43, 45) der jeweiligen Hauptflügel (9, 11) bzw. Windleitflügel (13, 15) liegen.

9. Savonius-Rotor nach Anspruch 7 oder Anspruch 8, **dadurch gekennzeichnet, dass** die dritten Flügel (61, 63) von den Windeinlassenden (65, 67) aus jeweils entlang einer geraden Linie erstrecken, wobei die geraden Linien in Bezug auf die Umfangsrichtung des Rotors (1) in Richtung auf den Rotormittelpunkt geneigt sind.

10. Savonius-Rotor nach einem der Ansprüche 1 bis 9, **dadurch gekennzeichnet, dass** die die radial äußeren Abschnitte (27, 29) der Hauptflügel (9, 11) von der halbkreisförmigen Biegung abweichen.

11. Savonius-Rotor nach einem der Ansprüche 1 bis 10, **dadurch gekennzeichnet, dass** die die radial äußeren Enden (39, 41) der Hauptflügel (9, 11) über einen von den Abschlussscheiben (5, 7) definierten Kreis vorstehen.

12. Savonius-Rotor nach einem der Ansprüche 1 bis 11, **dadurch gekennzeichnet, dass** wenigstens zwei Rotoren (1, 3) mit einer gemeinsamen Rotationsachse (A) übereinander angeordnet sind, wobei die Hauptflügel der Rotoren (1, 3) um einen Winkel um die Rotationsachse (A) gegeneinander verdreht sind.

13. Savonius-Rotor nach Anspruch 12, **dadurch gekennzeichnet, dass** zwei Rotoren (1, 3) mit einer gemeinsamen Rotationsachse (A) übereinander angeordnet sind, wobei die Hauptflügel der Rotoren um 90 Grad um die Rotationsachse (A) gegeneinander verdreht sind.

14. Savonius-Rotor nach Anspruch 12 oder Anspruch 13, **dadurch gekennzeichnet, dass** auf der Abschlussscheibe (17) des obersten Rotors (3) Hilfsflügel (55) angeordnet sind, die gleichmäßig um die Rotationsachse (A) herum verteilt und gegen die Drehrichtung des Rotors (3) um einen Neigungswinkel aus der Vertikalen heraus geneigt sind.

15. Savonius-Rotor nach Anspruch 14, **dadurch gekennzeichnet, dass** die oberste Abschlussscheibe (17) bei den Hauptflügeln zumindest im Bereich der radial äußeren Abschnitte (25, 27) der Hauptflügel Öffnungen (57, 59) aufweist und die Hilfsflügel (55) so um die Rotationsachse (A) herum verteilt sind, dass sich jeweils ein Hilfsflügel (55) über einer der Öffnungen (57, 59) in der Abschlussscheibe (17) befindet.

## Claims

1. A Savonius rotor for wind energy plants with a vertical axis of rotation (A), wherein the rotor (1) comprises an upper terminating plate (7), a lower terminating plate (5) and two main vanes (9, 11) which extend between the terminating plates (5, 7) and are arranged offset with respect to each other and which are curved in a section at a right angle to the axis of rotation (A) in such a way that they have in each case a concave inner side (31, 33) acting as a wind capture face, **characterized in that** wind deflector vanes (13, 15) are arranged at a distance in front of the concave inner sides (31, 33) of the main vanes (9, 11), wherein the wind deflector vanes (13, 15) are arranged offset with respect to one another and are curved in a section at a right angle to the axis of rotation (A) in such a way that they have in each case a concave inner side (35, 37) which faces in the same direction as the concave inner side (31, 33) of the corresponding main vane (9, 11).

2. A Savonius rotor according to claim 1, **characterized in that** the main vanes (9, 11) have radially outer portions (27, 29) which are inclined towards the outside with respect to the peripheral direction of the rotor (1).

3. A Savonius rotor according to claim ... [*sic*] or claim 2, **characterized in that** the main vanes (9, 11) and the wind deflector vanes (13, 15) have in each case radially outer ends (39, 41, 43, 45) at which the distance thereof from the axis of rotation (A) is greatest, and the distance of the radially outer ends (43, 45) of the wind deflector vanes (13, 15) from the radially outer ends of the main vanes (9, 11) corresponds to half the distance between the radially outer ends (39, 41) of the main vanes (9, 11) and the axis of rotation (A).

4. A Savonius rotor according to any one of claims 1 to 3, **characterized in that** the distance of the wind deflector vanes (13, 15) from the main vanes decreases starting from the radially outer ends (39, 41, 43, 45) towards the axis of rotation.

5. A Savonius rotor according to any one of claims 1 to 4, **characterized in that** the offset between the main vanes (9, 11) arranged offset amounts to 20 % of the diameter of the upper or lower terminating plate (5, 7).

6. A Savonius rotor according to any one of claims 1 to 5, **characterized in that** the offset between the wind deflector vanes (13, 15) arranged offset amounts to half the offset of the main vanes (9, 11).

7. A Savonius rotor according to any one of claims 1 to 6, **characterized in that** a third vane (61, 63) is arranged in each case in front of the concave inner sides (31, 33, 35, 37) [of the] the main vanes (9, 11) and/or the wind deflector vanes (13, 15), wherein the third vane (61, 63) extends in a section at a right angle to the axis of rotation (A) starting from a wind entry end (65, 67) in the direction towards the concave inner side (31, 33, 35, 37) of the the main vanes (9, 11) or the wind deflector vanes (13, 15) respectively.

8. A Savonius rotor according to claim 7, **characterized in that** the wind entry ends (65, 67) of the third vanes (61, 63) are situated on a radial line with the radially outer ends (43, 45) of the respective main vanes (9, 11) or wind deflector vanes (13, 15) as viewed from the axis of rotation (A).

9. A Savonius rotor according to claim 7 or claim 8, **characterized in that** the third vanes (61, 63) extend from the wind entry ends (65, 67) along a straight line in each case, wherein the straight lines are inclined in the direction towards the centre of the rotor with reference to the peripheral direction of the rotor (1).

10. A Savonius rotor according to any one of claims 1 to 9, **characterized in that** the radially outer portions (27, 29) of the main vanes (9, 11) deviate from the semicircular curve.

11. A Savonius rotor according to any one of claims 1 to 10, **characterized in that** the radially outer ends (39, 41) of the main vanes (9, 11) project beyond a circle defined by the terminating plates (5, 7).

12. A Savonius rotor according to any one of claims 1 to 11, **characterized in that** at least two rotors (1, 3) with a common axis of rotation (A) are arranged one above the other, wherein the main vanes of the rotors (1, 3) with respect to one another are turned by an angle about the axis of rotation (A).

13. A Savonius rotor according to claim 12, **characterized in that** two rotors (1, 3) with a common axis of rotation (A) are arranged one above the other, wherein the main vanes of the rotors are turned with respect to one another by 90° about the axis of rotation (A).

14. A Savonius rotor according to claim 12 or claim 13, **characterized in that** auxiliary vanes (55), which are distributed uniformly about the axis of rotation (A) and are inclined contrary to the direction of rotation of the rotor (3) by an angle of inclination from the vertical, are arranged on the terminating plate (17) of the uppermost rotor (3).

15. A Savonius rotor according to claim 14, **characterized in that** in the case of the main vanes the uppermost terminating plate (17) has openings (57, 59) at least in the region of the radially outer portions (25, 27) of the main vanes, and the auxiliary vanes (55) are distributed about the axis of rotation (A) in such a way that one auxiliary vane (55) in each case is situated above one of the openings (57, 59) in the terminating plate (17).

## Revendications

1. Rotor de Savonius pour éoliennes à axe de rotation vertical (A), le rotor (1) comprenant une plaque de fermeture supérieure (7), une plaque de fermeture inférieure (5) et deux pales principales (9, 11) qui s'étendent entre les plaques de fermeture (5, 7) et sont disposées de manière décalée l'une par rapport à l'autre et cintrées dans un plan de coupe perpendiculaire à l'axe de rotation (A) de façon à présenter respectivement une face intérieure concave (31, 33) servant de surface de captage du vent, **caractérisé en ce que** des pales de guidage du vent (13, 15) sont montées à distance en amont des faces intérieures concaves (31, 33) des pales principales (9, 11), les pales de guidage du vent (13, 15) étant disposées de manière décalée l'une par rapport à l'autre et étant cintrées dans un plan de coupe perpendiculaire à l'axe de rotation (A) de façon à présenter respectivement une face intérieure concave (35, 37) qui est orientée dans la même direction que la face intérieure concave (31, 33) de la pale principale (9, 11) correspondante.

2. Rotor de Savonius selon la revendication 1, **caractérisé en ce que** les pales principales (9, 11) présentent des sections radialement extérieures (27, 29) et sont inclinées vers l'extérieur par rapport à la direction périphérique du rotor (1)

3. Rotor de Savonius selon la revendication 1 ou 2, **caractérisé en ce que** les pales principales (9, 11) et les pales de guidage du vent (13, 15) présentent chacune des extrémités radialement extérieures (39, 41, 43, 45), extrémités auxquelles la distance qui les sépare de l'axe de rotation (A) est maximale, et **en ce que** la distance entre les extrémités radialement extérieures (43, 45) des pales de guidage du vent (13, 15) et les extrémités radialement extérieures des pales principales (9, 11) correspond à la moitié de la distance entre les extrémités radialement extérieures (39, 41) des pales principales (9, 11) et l'axe de rotation (A).

4. Rotor de Savonius selon l'une des revendications 1 à 3, **caractérisé en ce que** la distance entre les pales de guidage du vent (13, 15) et les pales principales se réduit à partir des extrémités radialement extérieures (39, 41, 43, 45) en direction de l'axe de rotation.

5. Rotor de Savonius selon l'une des revendications 1 à 4, **caractérisé en ce que** le décalage entre les pales principales (9, 11) disposées de manière décalée est égal à 20 % du diamètre des plaques supérieure et inférieure (5, 7).

6. Rotor de Savonius selon l'une des revendications 1 à 5, **caractérisé en ce que** le décalage entre les pales de guidage du vent (13, 15) disposées de manière décalée correspond à la moitié du décalage des pales principales (9, 11).

7. Rotor de Savonius selon l'une des revendications 1 à 6, **caractérisé en ce qu'**une troisième pale (61, 63) est respectivement montée une troisième pale (61, 63) en amont des faces intérieures concaves (31, 33, 35, 37) des pales principales (9, 11) et/ou des pales de guidage du vent (13, 15), la troisième pale (61, 63) s'étendant dans un plan de coupe perpendiculaire à l'axe de rotation (A) depuis une extrémité d'entrée du vent (65, 67) en direction de la face intérieure concave (31, 33, 35, 37) des pales principales (9, 11) ou des pales de guidage du vent (13, 15).

8. Rotor de Savonius selon la revendication 7, **caractérisé en ce que** les extrémités d'entrée du vent (65, 67) des troisièmes pales (61, 63), vues à partir de l'axe de rotation (A), sont situées sur une ligne radiale avec les extrémités radialement extérieures (43, 45) des pales principales (9, 11) et/ou des pales de guidage du vent (13, 15) respectives.

9. Rotor de Savonius selon la revendication 7 ou la revendication 8, **caractérisé en ce que** les troisièmes pales (61, 63) s'étendent, chacune le long d'une ligne droite à partir des extrémités d'entrée du vent (65, 67), les lignes droites étant inclinées en direction du centre du rotor (1) par rapport à la direction périphérique du rotor (1).

10. Rotor de Savonius selon l'une des revendications 1 à 9, **caractérisé en ce que** les parties radialement extérieures (27, 29) des pales principales (9, 11) s'écartent du cintrage semi-circulaire.

11. Rotor de Savonius selon l'une des revendications 1 à 10, **caractérisé en ce que** les extrémités radialement extérieures (39, 41) des pales principales (9, 11) dépassent au-delà d'un cercle défini par les plaques de fermeture (5, 7).

12. Rotor de Savonius selon l'une des revendications 1 à 11, **caractérisé en ce qu'**au moins deux rotors (1, 3) à axe de rotation (A) commun sont disposés l'un au-dessus de l'autre, les pales principales des rotors étant déplacées d'un certain angle l'une par rapport à l'autre autour de l'axe de rotation (A).

13. Rotor de Savonius selon la revendication 12, **caractérisé en ce que** deux rotors (1, 3) à axe de rotation (A) commun sont disposés l'un au-dessus de l'autre, les pales principales des rotors étant déplacées de 90 degrés l'une par rapport à l'autre autour de l'axe de rotation (A).

14. Rotor de Savonius selon la revendication 12 ou la revendication 13, **caractérisé en ce que** sont disposées sur la plaque de fermeture (17) du rotor le plus supérieur (3) des pales auxiliaires (55) qui sont réparties uniformément tout autour de l'axe de rotation et sont inclinées d'un angle d'inclinaison à partir de la verticale à l'opposé du sens de rotation du rotor (3).

15. Rotor de Savonius selon la revendication 14, **caractérisé en ce que** la plaque de fermeture (17) la plus supérieure présente des orifices (57, 59) au niveau des pales principales, au moins dans la région des parties radialement extérieures (25, 27) des pales principales, et **en ce que** les pales auxiliaires (55) sont réparties tout autour de l'axe de rotation (A) de façon telle qu'une pale auxiliaire (55) se trouve respectivement au-dessus de l'un des orifices (57, 59) dans la plaque de fermeture (17).
